# EUROPEAN PATENT SPECIFICATION

(11) **EP 0 440 223 B1**
(45) Date of publication and mention of the grant of the patent: **03.12.1997**
(21) Application number: 91101283.9
(22) Date of filing: 31.01.1991
(51) Int. Cl.: G01N 27/30, G01N 27/34

(54) **Method of preparation of a capillary glass tube as miniaturized sensors**
Verfahren zur Herstellung eines kapillaren Glasröhrchens für miniaturisierte Sensoren
Méthode de fabrication d'un tube de verre capillaire pour des capteurs à gouttes miniatures

(30) Priority: 31.01.1990 CS 456/90; 31.01.1990 CS 457/90; 31.01.1990 CS 458/90; 17.08.1990 CS 4049/90
(43) Date of publication of application: 07.08.1991
(73) Proprietor: Novotny, Ladislav, Praha 10 (CZ)
(72) Inventor: Novotny, Ladislav, Praha 10 (CZ)
(74) Representative: Beetz & Partner Patentanwälte

(56) References cited:
- EP-A- 0 310 927
- EP-A- 0 376 920
- GB-A- 2 013 346
- TRACS/TRENDS IN ANALYTICAL CHEMISTRY vol. 6, no. 7, 31 August 1987, AMSTERDAM, NL pages 176 - 181 L. NOVOTNY 'SPINDLE CAPILLARY FOR MERCURY DROP ELECTRODES'
- ANALYTICAL CHEMISTRY vol. 59, no. 17, 1 September 1987, WASHINGTON, DC, US pages 222216 - 2218 Z. KOWALSKI 'CONTROLLED GROWTH MERCURY DROP ELECTRODE'
- ANALYTICAL CHEMISTRY vol. 55, no. 2, 28 February 1983, WASHINGTON, DC, US pages 412 - 414 W. A. BYERS 'AUTOMATED HANGING MERCURY DROP ELECTRODE'

## Description

This invention relates to a method of preparing a capillary glass tube as a miniaturized sensor for a voltammetric analysis device according to the first part of claim 1.

One of the best representative of such a miniaturized sensor is the mercury drop electrode. The introduction of the static mercury drop electrodes (SMDE) several years ago represents one of the essential contributions to modern polarographic and voltammetric techniques and instrumentation as well. This type of electrode incorporates in some respect the properties of the dropping mercury electrode used by J. Heyrovsky at the beginning of polarography and the hanging mercury drop electrode (HMDE) used mainly in voltammetric stripping analysis.

Commercially produced SMDE systems represent a standard type of device used in chemical laboratories. A special analysis device for checking the friction losses of engines and fuel-motors, in which a capillary glass tube is used as a miniaturized sensor for measuring the composition and characteristics of the new and the used engine-oil, is described in the EP-B 0 376 920.

However, this type of instrument does not meet series present requirements or meet them only in a very limited extent, because the capillary tubes used as miniaturized sensors are not enabled to fulfill different requirements, e.g.
- generation of drops of various sizes, e.g. of volumes between 0.0005 µl - 1 µl,
- to choose and change the parameters of different modes in a very broad range (drop-time between 0.1 s and 200 - 300 s at the DME), time of drop growth at the HMDE between 20 ms and 20 s,
- to reach the drop size reproducibility of the HMDE down to ± 0.1 - 0.2 % and the reproducibility of the DME (at constant potential) down to ± 0.001 %,
- to provide a very good mechanical stability of the drop (HMDE, etc.), even under considerable mechanical or ultrasonic vibrations at very negative potentials, at sudden changes of potentials, at very high concentrations of surface active substances, etc.,
- to work in organic solvents, even at extremely negative potentials, e.g. -2.5 V to -3.1 V (SCE, sat. LiCl in CH₃OH),
- to provide the realization of renewal reasonable reproducible (e.g. ± 1 to ± 3 % and better (mini-, semimicroand microelectrodes) in modes DMµE, HMDµE, SMDµE) as well as meniscus mercury microelectrodes,
- to provide stepwisely growing Hg drop mini- and microelectrodes, e.g. the step-wisely growing (HMDE or HMDµE): the number of steps would thereby represent one of the electrode parameters,
- applicability in all mentioned modes independently of any analyser or in combination with external analysers, microcomputers, etc.,
- the applicability of the sensor in vertical as well as in nearly horizontal positions (depending partly on the mode used),
- the design of a miniaturized portable system, relatively simple to handle, including special "pen-type" electrodes.

As to the sensors based on liquid/liquid interface some versions of electrodes have been used, however, without the above mentioned equivalent attributes. Gas sensors had not been realized up to now in this (below described) form.

An object of the invention is to provide a method for preparing capillary glass tubes for using as miniaturized sensors in voltammetric analysis devices, which can fulfill the above requirements.

This object will be solved according to the invention by the features in the second part of claim 1.

This solution eliminates some undue effects, connected with the penetration of solution into the capillary, back pressure factors, irregularities due to interfacial processes in the capillary, microclosures, due mechanical vibrations etc.

The described solution meets the above mentioned demands and brings new possibilities in precise electrochemical measurements, in sensitive electroanalysis, in the field of development and application new interfacial techniques. With the miniaturized sensors produced by the method of the invention gas bubbles can be reproducible generated for precise and ready measurements of surface tension of liquids. The observed sensitivity of the method was considerably higher than that in case of the stalagmometric method.

Embodiments of the invention will be described by way of example, with reference to the accompanying drawings, in which:
- Fig. 1: shows the scheme of preparing a capillary tube,
- Fig. 2: shows examples of capillary tubes.

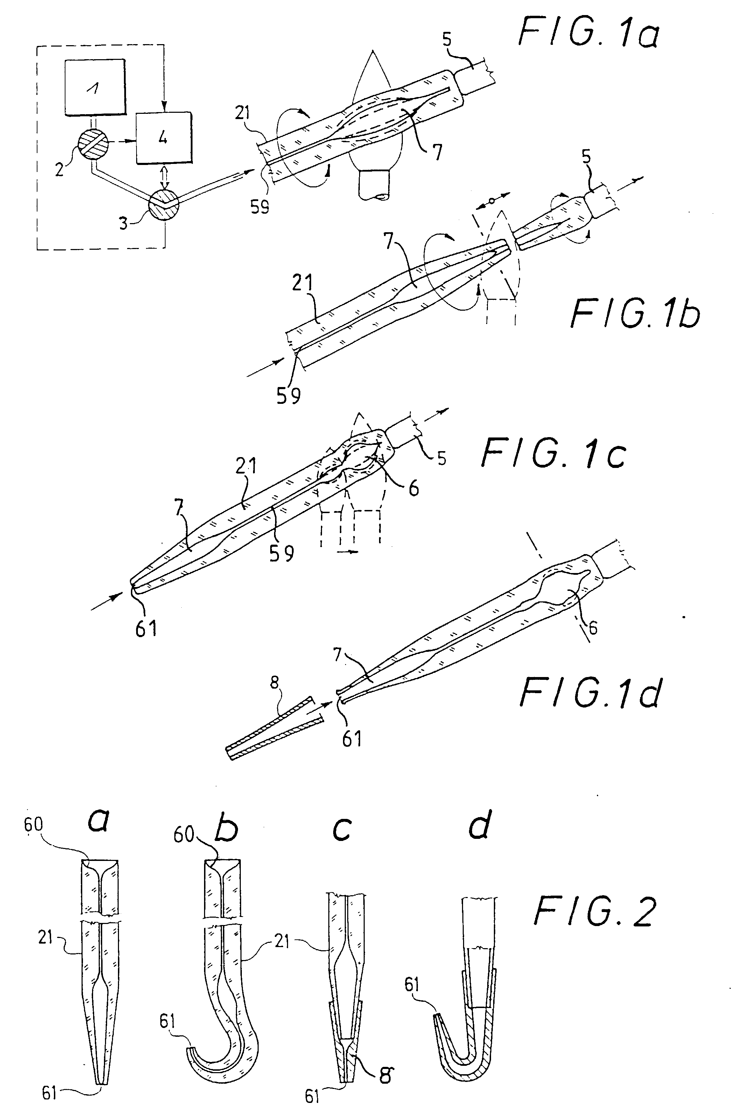

As shown in Fig. 1a a capillary glass tube 21 is heated in a determined section for a given time period at least to the softening-temperature of the tube material of e.g. 770 °K. From a certain moment a gas flow is passed in the lower end of the capillary 59 of the glass tube 21. The arrangement for applying said gas flow with a small overpressure of 0.07 MPa comprises a gas reservoir 1, a programmer 4 and control valves 2 and 3. The heated section of the glass tube 21 is blown up into the shape of a bubble 7. The applying of the gas flow into the capillary 59 is alternately interrupted, reduced or reversed, while the heating of this determined section will be continued. In this interruption step the bubble 7 shrinks to the required size and shape. This procedure is repeated in a given number of steps, starting by the applying of the gas flow into the capillary 59 of the glass tube 21 heated in the determined section for blowing up the bubble 7 or heated in another determined section (s. Fig. 1c). After forming the bubble 7 in a predetermined shape an appropriate section of the capillary glass tube will be drawn out by means 5 (s. Fig. 1b) after heating and this section will be cut in a predetermined place. The cut upper end of the glass tube is sealed and cut again in a particular place for forming an outlet opening or orifice 61 (s. Fig. 1b) .

Then the glass tube 21 is turned upside down, so that the formerly upper end becomes the lower end and vice versa. The whole procedure, starting by the heating of a determined particular section of the capillary glass tube 21 and blowing a gas flow into the lower end of the capillary or inner bore 59 of the glass tube 21, will be repeated until the moment when the blown-up section 6 has obtained the required shape. Then the blown-up section will be cut after heating and eventual drawing out, as it is shown in Fig. 1d. The upper part of the capillary glass tube 21 is heated again for a given time period and after cooling the upper part and lower end orifices are smoothened by grinding or melting. In a last step the lower end portion of the glass tube 21 will be provided with a hollow plastic extension 8.

As it is shown in Fig. 2a the inner bore 59 in the upper part of the capillary glass tube 21 prepared by the method described above has the form of a funnel-shaped saddle 60 or of its part. The lower part of the capillary glass tube 21 includes sections of cylindrical, conically widening and conically narrowing diameters extending down to the lower end orifice 61.

## Claims

1. Method for preparing a capillary glass tube as miniaturized sensor for a voltammetric analysis device,
said capillary glass tube (21) comprises a straight inner bore (59), a funnel-shaped saddle (60) at the inlet end and at the outlet end portion sections (7) of widening and conical narrowing down to an outlet orifice (61) for generating drops of various sizes, e.g. of volumes between 0.0005 µl - 1.0 µl, said method comprises the steps of
a) heating a determined section of a endside-closed rotating glass capillary tube for a given time period at least to the softening temperature of the glass,
b) passing a gas with a predetermined pressure from a reservoir (1) through a control valve (3) into the lower end of the capillary glass tube (21) for blowing up the heated section to a bubble of a determined size and shape,
c) alternately interrupting, reducing or reversing the gas flow into said capillary tube (21) while the heating continues until the bubble shrinks to the required size and shape,
d) repeating the steps a) to c) in a given number,
e) drawing out the heated section of the rotating capillary tube (21) for forming the section (7) of widening and conical narrowing,
f) cutting said drawn section at a determined place,
g) sealing off the open end and cutting again the drawn section at a determined place for forming the outlet opening (61),
h) turning up the capillary tube (21) so that its former upper end becomes its lower end and vice versa,
i) repeating the steps a) to d) in a particular upper section of the capillary tube (21),
k) cutting the blown-up section for forming the saddle (60) at the upper end of the capillary tube (21) and
l) heating the upper and lower end portion of the capillary tube (21) for smoothening the saddle (60) and the outlet opening (61).

2. Method according to claim 1,
characterized in that
the outlet end portion of the capillary tube (21) will be provided with a hollow plastic extension (8).

3. Method according to claim 1 or 2,
characterized in that
the sections of the capillary tube (21) will be heated to a temperature of 770 °K.

4. Method according to one of the claims 1 to 3,
characterized in that
the heated sections (6, 7) of the capillary tube (21) will be blown up with a gas pressure of 0.07 MPa.

## Patentansprüche

1. Verfahren zur Herstellung eines Glas-Kapillarrohrs als Miniatursensor für eine Voltammetrie-Analysevorrichtung, wobei das Glas-Kapillarrohr (21) eine gerade Innenbohrung (59), einen trichterförmigen Sattel (60) an dem Einlaßende sowie sich erweiternde und zu einer Auslaßöffnung (61) nach unten konisch verengende Teilbereiche (7) an dem Auslaßende aufweist, zur Erzeugung von Tröpfchen unterschiedlicher Größe, z.B. mit Volumen zwischen 0,0005 µl bis 1,0 µl, wobei das Verfahren folgende Schritte umfaßt:
a) Erwärmen eines bestimmten Abschnitts eines endseitig geschlossenen, rotierenden Glas-Kapillarrohrs während einer vorgegebenen Zeitdauer zumindest auf die Erweichungstemperatur des Glases,
b) Einleiten eines Gases mit einem vorbestimmten Druck von einem Behälter (1) über ein Steuerventil (3) in das untere Ende des Glas-Kapillarrohrs (21) zum Aufblasen des erwärmten Abschnitts zu einer Blase mit bestimmter Größe und Form,
c) abwechselndes Unterbrechen, Vermindern oder Umkehren des Gasstroms in das Kapillarrohr (21) bei fortdauernder Erwärmung, bis die Blase auf die erforderliche Größe und Form zusammenschrumpft,
d) Wiederholen der Schritte a) bis c) in einer bestimmten Anzahl,
e) Auseinanderziehen des erwärmten Abschnitts des rotierenden Kapillarrohrs (21) zur Formung des sich erweiternden und konisch verengenden Abschnitts (7),
f) Trennen des gezogenen Abschnitts an einer bestimmten Stelle,
g) Verschließen des offenen Endes und erneutes Trennen des gezogenen Abschnitts an einer bestimmten Stelle zur Formung der Auslaßöffnung (61),
h) Umdrehen des Kapillarrohrs (21), damit sein vorheriges oberes Ende zum unteren Ende wird und umgekehrt,
i) Wiederholen der Schritte a) bis d) in einem besonderen oberen Abschnitt des Kapillarrohrs (21),
k) Trennen des aufgeblasenen Abschnitts zur Formung des Sattels (60) an dem oberen Ende des Kapillarrohrs (21) und
l) Erwärmen der oberen und unteren Endabschnitte des Kapillarrohrs (21) zum Glätten des Sattels (60) und der Auslaßöffnung (61).

2. Verfahren nach Anspruch 1,
dadurch gekennzeichnet, daß
der auslaßseitige Endteil des Kapillarrohrs (21) mit einer hohlen Kunststoffverlängerung (8) versehen wird.

3. Verfahren nach Anspruch 1 oder 2,
dadurch gekennzeichnet, daß
die Abschnitte des Kapillarrohrs (21) auf eine Temperatur von 770 °K erwärmt werden.

4. Verfahren nach einem der Ansprüche 1 bis 3,
dadurch gekennzeichnet, daß
die erwärmten Bereiche (6, 7) des Kapillarrohrs (21) mit einem Gasdruck von 0,07 MPa aufgeblasen werden.

## Revendications

1. Procédé de préparation d'un tube capillaire en verre comme capteur miniaturisé pour un dispositif d'analyse voltampèremétrique,
ledit tube capillaire en verre (21) comprend un alésage intérieur droit (59), un col (60) en forme d'entonnoir au niveau de la partie formant extrémité d'entrée, et au niveau de la partie formant extrémité de sortie, de sections (7) d'élargissement et de rétrécissement conique jusqu'à un orifice de sortie (61) pour produire des gouttelettes de différentes tailles, par exemple de volumes compris entre 0,0005 µl et 1,0 µl, ledit procédé comprend les étapes suivantes :
a) le chauffage d'une section déterminée d'un tube capillaire en verre, rotatif, à une extrémité fermée, pendant une période de temps donnée, au moins jusqu'à la température de ramollissement du verre,
b) le passage d'un gaz avec une pression prédéterminée en provenance d'un réservoir (1) par l'intermédiaire d'une vanne de commande (3) dans l'extrémité inférieure du tube capillaire en verre (21) pour gonfler la section chauffée en une bulle de taille et de forme prédéterminées,
c) l'interruption, la réduction ou l'inversion, de façon alternée, de l'écoulement de gaz dans ledit tube capillaire (21) tout en continuant le chauffage jusqu'à ce que la bulle rapetisse jusqu'à la taille et la forme souhaitées,
d) la répétition des étapes a) à c) un nombre donné de fois,
e) l'étirage de la section chauffée du tube capillaire rotatif (21) pour former la section (7) d'élargissement et de rétrécissement conique,
f) la coupe de ladite section étirée à un emplacement déterminé,
g) le scellement de l'extrémité ouverte et la coupe à nouveau de la section étirée à un emplacement déterminé pour former l'ouverture de sortie (61),
h) le retournement du tube capillaire (21) de sorte que son extrémité supérieure précédente devient son extrémité inférieure et vice versa,
i) la répétition des étapes a) à d) dans une section supérieure particulière du tube capillaire (21),
k) la coupe de la section gonflée pour former le col (60) au niveau de l'extrémité supérieure du tube capillaire (21), et
l) le chauffage des parties formant extrémités supérieure et inférieure du tube capillaire (21) pour lisser le col (60) et l'ouverture de sortie (61).

2. Procédé selon la revendication 1,
caractérisé en ce que
la partie formant extrémité de sortie du tube capillaire (21) va être munie d'une extension creuse en plastique (8).

3. Procédé selon la revendication 1 ou 2,
caractérisé en ce que
les sections du tube capillaire (21) vont être chauffées à une température de 770 °K.

4. Procédé selon l'une des revendications 1 à 3,
caractérisé en ce que
les sections chauffées (6, 7) du tube capillaire (21) vont être gonflées par une pression de gaz de 0,07 MPa.
